# EUROPÄISCHE PATENTANMELDUNG

(11) **EP 3 783 842 A1**
(43) Veröffentlichungstag der Anmeldung: **24.02.2021**
(21) Anmeldenummer: 20186177.0
(22) Anmeldetag: 16.07.2020
(51) Int. Cl.: H04L 12/40

(54) **SYSTEM UND VERFAHREN ZUR DATENKOMMUNIKATION INNERHALB LANDWIRTSCHAFTLICHER ARBEITSMASCHINEN ODER ARBEITSKOMBINATIONEN**

(30) Priorität: 21.08.2019 DE 102019212530
(71) Anmelder: Horsch Maschinen GmbH, 92421 Schwandorf (DE)
(72) Erfinder: BULTMANN, Hubertus, 92421 Schwandorf (DE); BAUM, Daniel, 92421 Schwandorf (DE); HALBMANN, Daniel, 92421 Schwandorf (DE); STÖCKL, Sebastian, 92421 Schwandorf (DE)
(74) Vertreter: Benninger, Johannes

(57) **Zusammenfassung**

Es sind ein System (10) und ein Verfahren zur Datenkommunikation zwischen landwirtschaftlichen Arbeitsmaschinen (12) oder Komponenten von Arbeitskombinationen und wenigstens einem externen Empfängergerät (20) mittels Bussystem, vorzugsweise mittels CAN-Bussystem, offenbart. Das Bussystem umfasst einen Steuerrechner (16) sowie ein, insbesondere einem Arbeitsplatz eines Maschinenführers zugeordnetes Anzeige- und Eingabeterminal (14) sowie eine Datenschnittstelle zur Datenkommunikation mit mindestens einem externen Empfängergerät (20), das durch zumindest ein Anzeigegerät (22) und/oder Bediengerät gebildet ist.

In der Datenschnittstelle aufbereitete und umgewandelte Universaldaten werden aus den im Bussystem transportierten Daten oder Datenprotokollen in Gestalt von mit dem wenigstens einen externen Empfängergerät (20) grafisch darstellbaren Bilddaten gebildet und dem mindestens einen Empfängergerät (20) zur Verfügung gestellt.

Der Datenschnittstelle ist ein Rechnermodul zugeordnet, das die an das externe Empfängergerät (20) zu liefernden Daten aus den im Bussystem zwischen dem Steuerrechner (16) und dem Anzeige- und Eingabeterminal (14) übertragenen Daten und Datenprotokollen gewinnt.

## Beschreibung

Die vorliegende Erfindung betrifft ein System sowie ein Verfahren zur Datenkommunikation zwischen landwirtschaftlichen Arbeitsmaschinen oder Komponenten von Arbeitskombinationen und wenigstens einem externen Empfängergerät mit den Merkmalen der unabhängigen Ansprüche. So betrifft die Erfindung insbesondere ein System zur Anzeige bzw. zur grafischen Wiedergabe von maschinenspezifischen grafischen Benutzeroberflächen von in landwirtschaftlichen Maschinen verwendeten Anzeigegeräten, sog. Terminals, auf externen Geräten.

Die zahlreichen verfügbaren Einsatz- und Ausstattungsoptionen bei landwirtschaftlichen Arbeitsmaschinen und Zugmaschinen erfordern einen immer umfangreicher werdenden Einsatz elektronischer Systeme, seien dies Sensoren, Steuer- und Stellelemente oder die zur Überwachung und Beeinflussung der zahlreichen Systeme erforderlichen Anzeige- und Eingabeterminals, die dem Maschinenführer den Überblick und die notwendigen Beeinflussungsmöglichkeiten verschaffen. Um insbesondere Servicearbeiten optimieren zu können, ist der Wunsch entstanden, verschiedenste Nutzeroberflächen von Bediengeräten (nachfolgend auch als Terminals, Anzeigeeinrichtungen etc. bezeichnet) landwirtschaftlicher Maschinen auf beliebigen anderen Bediengeräten und Anzeigegeräten anzeigen zu können.

Um die graphische Nutzeroberfläche einer landwirtschaftlichen Arbeitsmaschine wie bspw. einer Sämaschine, einer Feldspritze o. dgl. auf einer Anzeigeeinrichtung einer nicht zu dieser landwirtschaftlichen Arbeitsmaschine - bspw. eine landwirtschaftliche Zugmaschine oder ein Traktor eines anderen Herstellers - gehörigen Anzeigeeinrichtung grafisch anzeigen zu können, ist es bislang notwendig, dass der Aufbau, der Hersteller, die Konfiguration etc. der jeweils verwendeten Terminals bekannt sind. Es war also bisher notwendig, dass die jeweils von den Anzeigeeinrichtungen wechselseitig übertragenen und empfangenen Signale, Daten etc. bekannt sind. Die Datenübertragung erfolgte bislang insbesondere mittels eines Bussystems, wobei in der Landwirtschaft zweckmäßigerweise ein CAN-Bussystem eingesetzt wird, welches dem ISO-Bus gemäß ISO 11783 entspricht.

Somit war es bislang erforderlich, um überhaupt die Möglichkeit zu haben, graphische Nutzeroberflächen verschiedener landwirtschaftlicher Arbeitsmaschinen auf einem Terminal anzeigen zu können, dass diese jeweils Signale gemäß ISO-Bus nach ISO 11786 verarbeiten konnten. Eine Übertragung zu anderen Anzeigegeräten, insbesondere auch zu bspw. mobilen Endgeräten, war bislang nicht oder nur begrenzt möglich.

Ein weiteres Problem bestand, wenn bspw. für Wartungszwecke Bilder oder Daten der Nutzeroberfläche an ein mobiles Endgerät (z.B. Tablet, Smartphone, etc.) übertragen werden sollten. Da solche mobile Endgeräte nicht dem ISO-Bus Standard entsprechen, ist bislang eine Anzeige einer Nutzeroberfläche einer landwirtschaftlichen Arbeitsmaschine auf einem mobilen Endgerät nicht möglich. Eine Ausnahme besteht nur dann, wenn bspw. auf dem mobilen Endgerät ein herstellerspezifisches Anwendungsprogramm vorhanden ist, d.h. ein Anwendungsprogramm des Herstellers des Terminals oder der landwirtschaftlichen Arbeitsmaschine.

Ausgehend von den vorab genannten Problemen setzt die vorliegende Erfindung an, deren Ziel es ist, ein System oder ein Verfahren zur Datenkommunikation zwischen landwirtschaftlichen Arbeitsmaschinen oder Komponenten von Arbeitsmaschinen und/oder Arbeitskombinationen wie landwirtschaftlicher Zugmaschinen mit oder ohne gezogene oder aufgesattelte Anbaugeräte zur Verfügung zu stellen, die auf Basis eines weitgehend ohne ändernde Eingriffe eingesetzten Bussystems eine Kommunikation mit externen Geräten erlauben, die unterschiedlichste Spezifikationen aufweisen können.

Zur Erreichung des identifizierten Ziels schlägt die vorliegende Erfindung ein System zur Datenkommunikation mit den Merkmalen des Anspruchs 1 vor. Das System ist vorgesehen zum Einsatz in landwirtschaftlichen Maschinen, Arbeitsmaschinen, landwirtschaftlichen Arbeitskombinationen oder Komponenten von Arbeitsmaschinen und/oder Arbeitskombinationen. Was in diesem und im folgenden Zusammenhang als landwirtschaftliche Maschinen oder landwirtschaftlichen Arbeitsmaschinen bezeichnet wird, kann insbesondere landwirtschaftliche Zugmaschinen, aber auch selbstfahrende landwirtschaftliche Arbeitsmaschinen wie etwa selbstfahrende Feldspritzen, Erntemaschinen oder dgl. Maschinen meinen und begrifflich umfassen. Landwirtschaftliche Arbeitskombinationen im Sinne der vorliegenden Erfindung können etwa landwirtschaftliche Zugmaschinen mit frontseitig und/oder heckseitig und/oder in seitlichen Anbauräumen (links und/oder rechts) angekoppelten Anbaugeräten unterschiedlichster Art sein. Ebenso können die hier als landwirtschaftliche Arbeitskombinationen bezeichneten komplexeren Maschineneinheiten etwa durch landwirtschaftliche Zugmaschinen mit frontseitig und/oder heckseitig aufgesattelten Anbaugeräten unterschiedlichster Art gebildet sein.

Die Geräte, d.h. die Arbeitsmaschinen (z.B. Zugmaschinen) und Anbaugeräte sind dabei jeweils über ein elektronisches Bussystem wie insbesondere ein CAN-Bussystem elektronisch miteinander gekoppelt, so dass sie über das Datenbussystem oder das CAN-Bussystem elektronische Protokolldaten, Sensordaten, Zustandsdaten, Parameterdaten und/oder Steuersignale und/oder Regelsignale untereinander austauschen können. D.h., die miteinander gekoppelten Geräte kommunizieren auf elektronischem Wege über das Bussystem, das insbesondere durch ein CAN-Bussystem gebildet sein kann, in umfassender Weise.

Ein Bestandteil des Bussystems sind mindestens ein Steuerrechner sowie mindestens ein, insbesondere einem Arbeitsplatz eines Maschinenführers zugeordnetes Anzeige- und Eingabeterminal. Die Erfindung sieht vor, dass das Bussystem wenigstens eine Datenschnittstelle zur Datenkommunikation mit mindestens einem externen Empfängergerät aufweist, welche Datenschnittstelle grafisch darstellbare Daten für ein Anzeigegerät oder für mehrere Anzeigegeräte liefert.

Das externe Empfängergerät kann insbesondere durch zumindest ein Anzeigegerät und/oder Bediengerät gebildet sein. Die in der Datenschnittstelle aufbereiteten und umgewandelten Universaldaten werden aus den im Bussystem transportierten Daten oder Datenprotokollen gewonnen und in Gestalt von mit dem wenigstens einen externen Empfängergerät grafisch darstellbaren Bilddaten aufbereitet und/oder umgewandelt, so dass sie dem mindestens einen Empfängergerät angeboten und zur Verfügung gestellt werden können. Somit ermöglicht es das erfindungsgemäße System, Bilder auf Basis von ausgelesenen Datenprotokollen zu erzeugen und einem externen Empfängergerät zur Verfügung zu stellen, das nicht zwingend mit einer Datenbus-konformen Software ausgestattet sein muss, sondern mit einem nahezu beliebigen Betriebssystem betrieben werden kann.

Weiterhin sieht eine optionale Variante der Erfindung vor, dass der Datenschnittstelle ein Rechnermodul zugeordnet ist, das die an das externe Empfängergerät zu liefernden Daten aus den im Bussystem zwischen dem Steuerrechner und dem Anzeige- und Eingabeterminal übertragenen Daten und Datenprotokollen ableitet und/oder gewinnt.

Die im Bussystem oder im CAN-Bussystem vorhandene Datenschnittstelle mit dem ihr zugeordneten Rechnermodul kann insbesondere durch eine systemoffene Schnittstelle gebildet sein, die in der Lage ist, grafisch darstellbare Daten zu handhaben und zu übertragen oder zu liefern, die auch mit solchen externen Empfängergeräten visualisierbar sind, die nicht einer üblichen Bussystem-konformen oder CAN-Bussystem-konformen Spezifikation unterliegen müssen. Vielmehr sorgt die beim erfindungsgemäßen System vorhandene Datenschnittstelle mit Hilfe des ihr zugeordneten Rechnermoduls für eine Aufbereitung und Umwandlung der im Bussystem übermittelten elektronischen Daten bzw. Protokolle und wandelt diese in geeigneter Weise um, damit sie grafisch auch von anderen Geräten oder Anzeigegeräten erkannt und zur Darstellung und Ansteuerung von Bildschirmen oder Anzeigeoberflächen genutzt werden können, und zwar insbesondere auch von solchen Anzeigegeräten, die nicht der Bussystem- oder CAN-Bussystem-Spezifikation entsprechen.

Die Datenschnittstelle des erfindungsgemäßen Systems stellt auf diese Weise insbesondere Bilddateien für beliebige Geräte oder Anzeigegeräte zur Verfügung. Diese Bilddateien können insbesondere als Universaldaten generiert werden, die von unterschiedlichen elektronischen Anzeigegeräten genutzt und verarbeitet werden können. Diese elektronischen Anzeigegeräte können durch handelsübliche Tablet-Rechner, durch portable Personal-Computer, durch unterschiedlichste sog. Handheld-Computer, durch Smart-Phones oder dgl. mehr gebildet sein, die jeweils dazu geeignet sind, die Bilddaten zur Darstellung einer Kopie der auf den Terminals dargestellten Anzeigen oder aber zur Wiedergabe angepasster Anzeigedaten (z.B. Auszüge aus den Terminalanzeigen) zu nutzen.

Das erfindungsgemäße System umfasst ein den Bussystem- oder CAN-Bus-Spezifikationen genügendes Terminal, das etwa durch ein Bedientableau oder eine Anzeigeeinrichtung oder durch eine kombinierte Anzeige- und Eingabeeinrichtung wie etwa einen berührungsempfindlichen Bildschirm gebildet sein kann. Ein solches Terminal, gebildet etwa durch eine kombinierte Anzeige- und Eingabeeinrichtung, ist üblicherweise unverzichtbarer Bestandteil eines Fahrer- und Kommandostandes einer modernen landwirtschaftlichen Arbeitsmaschine. Das Terminal erlaubt die unterschiedlichsten Bedienschritte, die Eingabe von Steuerbefehlen für zahlreiche verschiedene landwirtschaftliche Geräte, seien dies Feldspritzen, Sämaschinen, Düngerstreuer, Bestellkombinationen o. dgl. mehr. Ebenso liefert ein solches Terminal Maschinen- und Zustandsdaten und erlaubt damit dem Maschinenführer die präzise Überwachung der jeweils eingesetzten Geräte. Bei Bedarf können in Reichweite des Maschinenführers auch mehrere solcher Terminals oder Anzeige- und Eingabeeinrichtungen angeordnet sein, die allesamt mit dem CAN-Bussystem gekoppelt sind.

Wenn im vorliegenden Zusammenhang allgemein von einem Bussystem oder von einem CAN-Bus oder von einem CAN-Bussystem gesprochen wird, so ist damit ein an sich bekanntes Controlled-Area-Network gemeint, wobei dieses Datenbussystem oder CAN-Bussystem insbesondere der in der Norm ISO 11783 niedergelegten Spezifikation entsprechen kann. Somit können auch alle hier als Schnittstellen bezeichneten Koppelstellen als sog. ISO-Bus-Schnittstellen nach ISO 11783 ausgeführt sein. Das oben so bezeichnete Terminal bzw. das insbesondere einem Arbeitsplatz eines Maschinenführers zugeordnete Anzeige- und Eingabeterminal ist mittels des ISO-Bus (in der Regel drahtgebunden) mit einer ECU (Rechnereinheit, Jobrechner, etc.) bzw. mit dem oben so bezeichneten Steuerrechner einer landwirtschaftlichen Arbeitsmaschine (z.B. Sämaschine, Feldspritze, oder dergl.) zur vorzugsweise wechselseitigen Signalübertragung verbunden bzw. verbindbar.

Das Terminal oder das hier so bezeichnete Anzeige- und Eingabeterminal kann insbesondere Bestandteil einer Zugmaschine der landwirtschaftlichen Arbeitsmaschine sein, kann jedoch oftmals auch von einem anderen Hersteller stammen als der zentrale Steuerrechner (die ECU) der landwirtschaftlichen Arbeitsmaschine. So kann bspw. eine landwirtschaftliche Arbeitsmaschine der Patentanmelderin (Horsch Maschinen GmbH) mit einem Traktor eines ersten Herstellers oder eines zweiten Herstellers kombiniert sein. Es wäre aber auch denkbar, dass das Terminal und die ECU Bestandteil einer selbstfahrenden landwirtschaftlichen Arbeitsmaschine (z.B. selbstfahrende Feldspritze, etc.) sind und dennoch die ECU und das Terminal von verschiedenen Herstellern verwendet werden.

Zwischen dem Terminal und dem Steuerrechner (hier auch als ECU bezeichnet) werden mittels der ISO-Bus-Schnittstelle gemäß einer bevorzugten Ausführungsvariante wechselseitig Signale (sog. CAN Nachrichten oder CAN Protokolle) übertragen. Aufgrund der Spezifikation des CAN-Bussystems sind die wechselseitig übertragenen Signale gemäß ISO 11783 standardisiert; insbesondere sind sie gemäß ISO 11783-6 standardisiert. D.h. die ISO 11783 legt Signalübertragungen fest, bspw. bzgl. Befehle oder bzgl. der Anordnung des zugehörigen Icon für den Befehl oder die Anzeige. So kann bspw. ein bestimmtes Signal XY einen Icon für EIN/AUS oben links auf der Anzeige definieren.

Auf Basis der somit wechselseitig zwischen dem zentralen Steuerrechner (der ECU) und dem Terminal übertragenen Informationen findet am Terminal eine zur Maschinenüberwachung und/oder zur Maschinenbedienung zugehörige grafische Visualisierung statt.

Eine Variante des erfindungsgemäßen Systems kann vorsehen, dass die Datenschnittstelle mit einer leitungsgebundene Ankoppelstelle zur Herstellung einer Leitungsverbindung mit mindestens einem externen Empfängergerät ausgestattet oder gekoppelt ist.

Wahlweise kann bei dem erfindungsgemäßen System die Datenschnittstelle auch mit einer drahtlosen Ankoppelstelle zur Herstellung einer drahtlosen Datenübertragungsverbindung zu mindestens einem externen Empfängergerät ausgestattet oder gekoppelt sein.

Der Datenschnittstelle ist vorzugsweise ein Rechnermodul zugeordnet, das die an das externe Empfängergerät zu liefernden Daten aus den im CAN-Bussystem übertragenen Signalen gewinnt, insbesondere ohne Beeinflussung der Signalübertragung innerhalb des CAN-Bussystems. Hierbei kann vorgesehen sein, dass das der Datenschnittstelle zugeordnete Rechnermodul neben einer Nutzung des externen Empfängergerätes als Anzeigegerät eine Datenübermittlung an das CAN-Bussystem erlaubt, insbesondere durch Übermittlung von Nutzereingaben und/oder von Steuerbefehlen durch das externe Empfängergerät und/oder durch ein externes Eingabegerät.

Die Besonderheit des erfindungsgemäßen Systems kann auch dadurch charakterisiert werden, dass an einer Stelle des Signalwegs zwischen dem zentralen Steuerrechner (der ECU) und dem Terminal eine weitere Datenverarbeitungseinrichtung in Gestalt einer hier so bezeichneten Ankoppelstelle angeordnet ist. Diese Datenverarbeitungseinrichtung ist zweckmäßig zur Signalerfassung der vorzugsweise wechselseitig zwischen dem Terminal und der ECU ausgetauschten Informationen ausgebildet, d.h. die Datenverarbeitungseinrichtung ist ausgebildet, die zwischen dem Terminal und der ECU ausgetauschten Informationen "abzuhören", und zwar insbesondere in vollem Umfang der zwischen dem Terminal und der ECU ausgetauschten Informationen. Dies bedeutet, dass der Datenverarbeitungseinrichtung die gleichen Informationen vorliegen wie der ECU und/oder dem Terminal. Der Begriff des "Abhörens" meint insbesondere, dass die Datenverarbeitungseinrichtung, das Terminal und die ECU über den CAN-Bus gemeinsam verbunden sind. Als wechselseitige Daten werden zwischen der ECU und dem Terminal sog. CAN Protokolle oder ISO Bus Protokolle übertragen; in diesen Protokollen befinden sich die für die Anzeige erforderlichen Angaben. Da die Datenverarbeitungseinrichtung ebenfalls mit dem CAN-Bus verbunden ist, kann diese ebenfalls die Protokolle mit erfassen bzw. erhält diese deshalb ebenso die Protokolle.

Die Datenverarbeitungseinrichtung bzw. Ankoppelstelle ist erfindungsgemäß derartig ausgeführt, dass diese auf Basis der "abgehörten" Informationen Bilder generieren kann und diese Bilder anschließend bspw. drahtgebunden oder drahtlos an ein mobiles Endgerät oder dergl. mobile Computereinrichtung und/oder auch in eine Datencloud und/oder auf einen Hof-PC übertragen kann.

So kann das der Datenschnittstelle zugeordnete Rechnermodul im Wesentlichen alle zwischen dem Steuerrechner und dem mindestens einen Anzeige- und Eingabeterminal über das CAN-Bussystem ausgetauschten Daten erfassen und protokollieren. Wahlweise können der leitungsgebundenen oder drahtlosen Ankoppelstelle der Datenschnittstelle permanent alle vom Rechnermodul erfassten Daten übermittelt werden.

Ebenso denkbar ist es jedoch auch, dass der leitungsgebundenen oder drahtlosen Ankoppelstelle der Datenschnittstelle in zyklischen Perioden reduzierte Teilmengen der vom Rechnermodul erfassten Daten übermittelt werden, wobei die Bildübertragung hierbei bspw. in Intervallen erfolgen kann, insbesondere in Intervallen von einer Sekunde oder einer halben Sekunde oder dergl., wobei dies wiederum in Abhängigkeit von der Menge an übertragenen Daten erfolgen kann, d.h. je häufiger eine Generierung von Bildern erfolgt, desto größer sind die somit übertragenen Datenvolumen. Die Datenverarbeitungseinrichtung oder Ankoppelstelle bzw. das mit dieser gekoppelte Rechnermodul kann entsprechend dimensioniert sein, dass eine möglichst häufige Bildgenerierung ermöglicht ist. Auch wäre es denkbar dass die Datenverarbeitungseinrichtung ausgebildet ist, die jeweiligen Bilder auf ein entsprechende Dateiformat oder eine entsprechende Dateigröße zu komprimieren, so dass die jeweiligen zu versendenden Datenvolumen verringert werden können, jedoch dennoch noch eine ausreichend Bildqualität erzeugt wird. Dies hat den Vorteil, dass Bilder an jegliche Anzeigeeinrichtungen übertragen werden können, da diese somit keine großen Datenmengen empfangen müssen.

So kann das externe Empfängergerät bspw. durch wenigstens ein drahtlos empfangendes Anzeigeterminal gebildet sein.

Als wesentlicher Bestandteil der Erfindung kann es somit angesehen werden, ein Kommunikationssystem zu schaffen, das zumindest ein Terminal, eine ECU sowie eine Datenverarbeitungseinrichtung umfasst, wobei die Datenverarbeitungseinrichtung ausgebildet ist, insbesondere wechselseitige zwischen der ECU und dem Terminal oder zwischen dem Terminal und der ECU übertragene Informationen, welche insbesondere nach ISO 11783 übertragen werden, zu erfassen und diese in eine graphische Darstellung umzuwandeln. Diese graphischen Darstellungen können anschließend an verschiedenste sonstige Anzeigegeräte übertragen und von diesen angezeigt werden.

Die Datenverarbeitungseinrichtung weist somit im Wesentlichen die gleichen Merkmale auf, wie ein zusätzliches Terminal, bzw. entspricht die Signalverarbeitung im Wesentlichen der eines Terminal, jedoch mit dem Unterschied, dass mittels der Datenverarbeitungseinrichtung normalerweise keine Bedienung möglich ist, bzw. keine Signaleingabe möglich ist, insbesondere keine Nutzerinteraktion möglich ist. Die Datenverarbeitungseinrichtung ist jedoch ausgebildet, aus ISO-Bus Daten (ISO Bus basierenden Protokollen), den ISO-Bus Signalen entsprechende Bilder zu generieren, welche Bilder wiederum ISO-Bus und Hersteller unabhängig an jegliche Anzeigeeinrichtungen übertragen werden können, insbesondere für eine Fernwartung bzw. Ferndiagnose übertragen werden können.

Eine weitere Variante des erfindungsgemäßen Systems kann in einer Weise ausgebildet sein, dass dem externen Empfängergerät ein externes Eingabegerät zur Erfassung und Verarbeitung von Nutzereingaben zugeordnet ist. D.h., bei dieser Variante kann der Benutzer nicht nur angezeigte Daten erhalten, sondern kann selbst auch Einfluss auf die Datensituation des CAN-Bus nehmen, etwa durch manuelle Eingaben an einer auf dem externen Eingabegerät angezeigten Benutzeroberfläche, die wiederum an den CAN-Bus übermittelt wird, um dort gewünschte Aktionen auszulösen.

Das externe Empfängergerät kann einen oder mehrere Datenspeicher (drahtlos - Cloud; drahtgebunden - physikalischer Speicher) umfassen. So kann die Datenverarbeitungseinrichtung eine zusätzliche Kommunikationsschnittstelle (z.B. Bluetooth, W-Lan, GSM-Modem, etc.) umfassen, wobei die zusätzliche Kommunikationsschnittstelle zweckmäßig ausgebildet ist, die mittels des in der Datenverarbeitungseinrichtung hinterlegten Auswerteprogramm generierten Bilder bspw. an eine Datencloud, ein mobiles Endgerät oder dergl. zu übertragen.

Das externe Anzeigeterminal kann in vorteilhafter Weise die grafische Darstellung des dem Maschinenführer zugänglichen Anzeige- und Eingabeterminals duplizieren und anzeigen, womit alle an das Anzeige- und Eingabeterminal übertragenen anzeigerelevanten Daten gemeint sind. Wahlweise kann jedoch auch vorgesehen sein, dass das externe Anzeigeterminal nur ausgewählte Daten aus der grafischen Darstellung des dem Maschinenführer zugänglichen Anzeige- und Eingabeterminals dupliziert und anzeigt.

Das externe Empfängergerät kann bspw. über das mit dem CAN-Bussystem gekoppelte Rechnermodul mit dem zentralen Steuerrechner und/oder mit dem Anzeige- und Eingabeterminal kommunizieren.

Eine weitere Ausführungsvariante des erfindungsgemäßen Systems sieht vor, dass die Kommunikation zwischen dem externen Empfängergerät und dem zentralen Steuerrechner und/oder mit dem Anzeige- und Eingabeterminal eine Initialisierung beim erstmaligen und/oder beim wiederholten Ankoppeln des Rechnermoduls und/oder bei erstmaligen oder wiederholten Nutzungen der Datenschnittstelle vorsieht. So kann etwa vorgesehen sein, dass bei erstmaliger Kommunikation zwischen der ECU und dem Terminal und/oder zwischen dem Terminal und der ECU Initialisierungs-Nachrichten übertragen werden, insbesondere gemäß der ISO 11783. Solche Daten können bspw. in der Form gebildet sein: "Zeige Status Drehzahl Dosiergerät an Position X an". Mittels dieser Initialisierungs-Nachrichten erfolgt dementsprechend zunächst die generelle Konfiguration der Bedienoberfläche des Terminals.

Die Kommunikation zur Konfiguration des Anzeige- und Eingabeterminals kann durch Datenübertragungen vom Rechnermodul genutzt werden. Von Vorteil kann es zudem sein, wenn die Konfiguration in einer Weise durchgeführt wird, dass das Rechnermodul eine Datenkommunikation unter Nutzung des CAN-Bussystems zwischen dem zentralen Steuerrechner und dem Anzeige- und Eingabeterminal auf Grundlage eines zeitlich vorgeordneten Initialisierungsvorganges des Rechnermoduls innerhalb des CAN-Bussystems freigibt.

Um sicher zu stellen, dass die Datenverarbeitungseinrichtung jegliche zwischen der ECU und dem Terminal übertragenen Informationen, insbesondere der Initialisierungsnachrichten mit erfasst, kann gemäß einer Weiterbildung der Erfindung zudem vorgesehen sein, dass eine Freigabe der Signalübertragung zwischen der ECU und dem Terminal erst dann erfolgt, nachdem die Kommunikation zwischen der ECU und der Datenverarbeitungseinrichtung und/oder zwischen dem Terminal und der Datenverarbeitungseinrichtung sichergestellt ist. Dies kann bspw. dadurch erreicht werden, indem die ECU ausgebildet ist, erst dann Initialisierungsnachrichten zu senden und/oder zu empfangen, nachdem diese eine Kommunikationsrückmeldung der Datenverarbeitungseinrichtung erhalten hat. Anders ausgedrückt, kann gesagt werden, dass technisch immer sichergestellt wird, dass die zusätzliche Datenverarbeitungseinrichtung immer als erstes am ISO-Bus vorhanden ist, d.h. in Datenkommunikation vorhanden ist, insbesondere als erste mit dem ISO-Bus gekoppelt ist.

Die Datenverarbeitungseinrichtung kann so ausgebildet sein, dass diese sowohl vom Terminal als auch von der ECU Daten aktiv abfragen kann. D.h. wenn die Datenverarbeitungseinrichtung oder das Rechnermodul andere Informationen vorliegen hat als bspw. das Terminal, kann die Datenverarbeitungseinrichtung in der ECU einen sog. Reboot auslösen bzw. initialisieren, so dass wiederum die Initialisierungsdaten nochmal übertragen werden, wobei dies zudem nur dann erforderlich sein kann wenn bspw. aus diversen Gründen die Datenverarbeitungseinrichtung nicht als "erstes" mit dem ISO-Bus in Datenkommunikation steht.

Zudem ist es möglich, dass die Datenverarbeitungseinrichtung ausgebildet ist, Daten von der ECU oder vom Terminal aktiv abzufragen. Z.B. "Welche Daten habt ihr im Protokoll in Zeile XY versendet".

Durch abhören jeglicher Nachrichten (Protokolle) wird die komplette Kommunikation am ISO-Bus abgehört, d.h. dass nicht nur eine Statische graphische Nutzeroberfläche erzeugt werden kann, sondern das bspw. auf Basis sich verändernder Daten, d.h. wenn sich die graphische Darstellung des Terminal ändert, auch wieder mittels der Datenverarbeitungseinrichtung neue Bilder erzeugt werden können. Dies kann insbesondere bei Statusanzeigen (z.B. Füllstand, Bearbeitete Fläche, Aktiv geschaltene Maschinenkomponenten, etc.) relevant sein, wobei die Häufigkeit wiederum definierbar oder definiert sein kann.

Zur Erreichung des oben genannten Ziels schlägt die Erfindung außerdem ein Verfahren zur Datenkommunikation zwischen landwirtschaftlichen Arbeitsmaschinen oder Komponenten von Arbeitsmaschinen und/oder Arbeitskombinationen und wenigstens einem externen Empfängergerät mittels Bussystem, vorzugsweise mittels CAN-Bussystem, vor. Hierbei ist vorgesehen, dass das Bussystem eine Datenverbindung zwischen mindestens einem Steuerrechner sowie einem, insbesondere einem Arbeitsplatz eines Maschinenführers zugeordneten Anzeige- und Eingabeterminal herstellt. Außerdem erlaubt das Bussystem über wenigstens eine Datenschnittstelle eine Datenkommunikation mit mindestens einem, durch zumindest ein Anzeigegerät und/oder Bediengerät gebildeten externen Empfängergerät, wobei in der Datenschnittstelle aufbereitete und umgewandelte Universaldaten aus den im Bussystem transportierten Daten oder Datenprotokollen in Gestalt von mit dem wenigstens einen externen Empfängergerät grafisch darstellbaren Bilddaten gebildet und dem mindestens einen Empfängergerät zur Verfügung gestellt werden.

Das Verfahren kann darüber hinaus zudem dadurch gekennzeichnet sein, dass die Datenschnittstelle mit einem ihr zugeordneten Rechnermodul kommuniziert, welches die an das externe Empfängergerät übermittelten Daten aus den im Bussystem zwischen dem Steuerrechner und dem Anzeige- und Eingabeterminal übertragenen Daten und Datenprotokollen gewinnt.

Das Verfahren kann bspw. für eine Steuerung und/oder Regelung und/oder für eine Überwachung landwirtschaftlicher Arbeitsmaschinen oder Arbeitskombinationen wie landwirtschaftlicher Zugmaschinen mit oder ohne gezogene oder aufgesattelte Anbaugeräte eingesetzt werden, welche Arbeitsmaschinen und Anbaugeräte jeweils über ein Bussystem oder ein CAN-Bussystem elektronisch miteinander gekoppelt sind und über das Bussystem Sensordaten, Zustandsdaten, Parameterdaten und/oder Steuersignale untereinander austauschen.

Wahlweise kann die Datenschnittstelle durch eine systemoffene Schnittstelle gebildet sein, die grafisch darstellbare Daten liefert, die auch mit solchen externen Empfängergeräten visualisierbar sind, die nicht einer CAN-Bussystem-konformen oder einer Bussystem-konformen Spezifikation unterliegen.

Bei dem erfindungsgemäßen Verfahren kann als externes Empfängergerät insbesondere ein mobiles Endgerät wie bspw. ein Tablet-Rechner verwendet werden, was vielfältige Vorteile und zusätzliche Einsatzmöglichkeiten mit sich bringt.

Es sei an dieser Stelle festgehalten, dass das Verfahren insbesondere ein System zur Datenkommunikation und/oder zur Steuerung und/oder Regelung und/oder zur Überwachung landwirtschaftlicher Arbeitsmaschinen oder Arbeitskombinationen wie landwirtschaftlicher Zugmaschinen mit oder ohne gezogene oder aufgesattelte Anbaugeräte nutzen kann oder mit einem solchen System arbeiten kann, wie es oben in verschiedenen Ausführungsvarianten erläutert wurde.

Somit sei an dieser Stelle ausdrücklich betont, dass alle Aspekte und Ausführungsvarianten, die im Zusammenhang mit dem erfindungsgemäßen System erläutert wurden, gleichermaßen Teilaspekte des erfindungsgemäßen Verfahrens betreffen oder bilden können. Wenn daher an einer Stelle bei der Beschreibung oder auch bei den Anspruchsdefinitionen zum erfindungsgemäßen System von bestimmten Aspekten und/oder Zusammenhängen und/oder Wirkungen die Rede ist, so gilt dies gleichermaßen für das erfindungsgemäße Verfahren.

Außerdem betrifft die vorliegende Erfindung eine landwirtschaftliche Arbeitsmaschine oder Arbeitskombinationen wie eine landwirtschaftliche Zugmaschine mit oder ohne gezogenem oder aufgesatteltem Anbaugerät, das ein System gemäß einer der zuvor beschriebenen Ausführungsvarianten aufweist, oder die mit einem Verfahren gemäß obiger Definition betrieben werden kann.

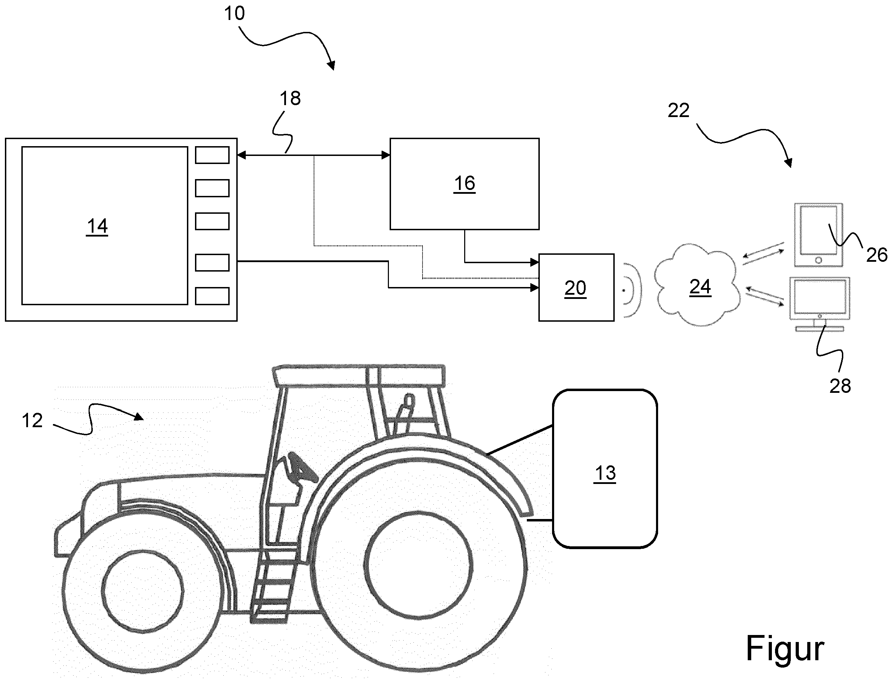

Im Folgenden wird anhand der beigefügten Figur, die eine Variante eines erfindungsgemäßen Systems zur Datenkommunikation und/oder zur Steuerung und/oder Regelung und/oder zur Überwachung landwirtschaftlicher Arbeitsmaschinen oder Arbeitskombinationen wie landwirtschaftlicher Zugmaschinen mit oder ohne gezogene oder aufgesattelte Anbaugeräte, die Erfindung näher erläutert. Die Größenverhältnisse der einzelnen Elemente zueinander in der einzigen Figur entsprechen nicht immer den realen Größenverhältnissen, da einige Formen vereinfacht und andere Formen zur besseren Veranschaulichung vergrößert im Verhältnis zu anderen Elementen dargestellt sind. Es sei darauf hingewiesen, dass die dargestellte Ausführungsform lediglich ein Beispiel darstellt, wie das erfindungsgemäße System ausgestaltet sein kann, ohne dass damit eine abschließende Begrenzung verbunden sein soll.

In der vorliegenden Figur ist ein System bzw. Datenbussystem 10 zur Datenkommunikation und/oder zur Steuerung und/oder Regelung und/oder zur Überwachung landwirtschaftlicher Arbeitsmaschinen 12 offenbart. Die hier gezeigte Arbeitsmaschine 12 - im Ausführungsbeispiel eine landwirtschaftliche Zugmaschine bzw. ein Traktor - weist ein heckseitig angeordnetes Anbaugerät 13 auf, das bspw. durch eine am Dreipunktgestänge angekoppelte landwirtschaftliche Feldspritze o. dgl. gebildet sein kann.

Die landwirtschaftliche Arbeitsmaschine 12 und das hier nur beispielhaft und ganz schematisch dargestellte Anbaugerät 13 sind jeweils über einen CAN-Datenbus elektronisch miteinander gekoppelt, so dass sie über das CAN-Bussystem 10 Sensordaten, Zustandsdaten, Parameterdaten und/oder Steuersignale untereinander austauschen können.

Das System 10 umfasst mindestens ein Anzeige- und Eingabeterminal 14, welches in einer Fahrerkabine der landwirtschaftlichen Arbeitsmaschine 12 platziert ist, so dass der Fahrer der landwirtschaftlichen Arbeitsmaschine 12 jederzeit Zugriff und/oder Einsicht auf das mindestens ein Anzeige- und Eingabeterminal 14 hat. Bei dem Anzeige- und Eingabeterminal 14 handelt es sich insbesondere um ein CAN (Controlled-Area-Network) fähiges Terminal, welches durch eine kombinierte Anzeige- und Eingabeeinrichtung wie etwa einen berührungsempfindlichen Bildschirm gebildet ist.

Zudem umfasst das System 10 mindestens einen zentralen Steuerrechner (ECU) 16, welcher über einen ISO-Bus 18 mit mindestens einem Anzeige- und Eingabeterminal 14 vorzugsweise drahtgebunden verbunden bzw. gekoppelt ist. D.h. das mindestens eine Anzeige- und Eingabeterminal 14 und der mindestens eine Steuerrechner (ECU) 16 sind über den ISO-BUS 18 zur vorzugsweise wechselseitigen Signalübertragung von sog. CAN-Nachrichten, CAN Protokollen und/oder ISO BUS Protokollen miteinander verbunden bzw. verbindbar.

Aufgrund der Spezifikation des CAN-Bussystems sind die wechselseitig übertragenen Signale gemäß ISO 11783 standardisiert; insbesondere sind sie gemäß ISO 11783-6 standardisiert. D.h. die ISO 11783 legt Signalübertragungen fest, bspw. bzgl. Befehle oder bzgl. der Anordnung des zugehörigen Icon für den Befehl oder die Anzeige. So kann bspw. ein bestimmtes Signal XY einen Icon für EIN/AUS oben links auf der Anzeige definieren.

Auf Grundlage der wechselseitig übertragenen Signale zwischen dem mindestens einen Anzeige- und Eingabeterminal 14 und dem mindestens einen Steuerrechner 16 findet am mindestens einen Anzeige- und Eingabeterminal 14 eine zur Maschinenüberwachung und/oder zur Maschinenbedienung zugehörige grafische Visualisierung statt.

Das CAN-Bussystem weist wenigstens eine Datenschnittstelle zur Datenkommunikation mit mindestens einem externen Empfängergerät 22 auf, welche Datenschnittstelle grafisch darstellbare Daten für ein Anzeigegerät 22 liefert. Bei dem externen Empfängergerät 22 handelt es sich insbesondere um eine Datenverarbeitungseinrichtung.

Die im CAN-Bussystem 10 vorhandene Datenschnittstelle ist insbesondere durch eine systemoffene Schnittstelle gebildet, die in der Lage ist, grafisch darstellbare Daten zu handhaben und zu übertragen oder zu liefern, die auch mit solchen externen Empfängergeräten 20 visualisierbar sind, die nicht einer CAN-Bussystem-konformen Spezifikation unterliegen.

Beispielsweise ist die Datenschnittstelle mit einer leitungsgebundenen Ankoppelstelle zur Herstellung einer Leitungsverbindung mit mindestens einem externen Empfängergerät 20 und/oder mit einer drahtlosen Ankoppelstelle zur Herstellung einer drahtlosen Datenübertragungsverbindung zu mindestens einem externen Empfängergerät 20 ausgestattet oder gekoppelt.

Dieser Datenschnittstelle ist vorzugsweise ein Rechnermodul zugeordnet, das die an das mindestens eine externe Empfängergerät 20 zu liefernden Daten aus den im CAN-Bussystem übertragenen Signalen gewinnt bzw. "herausfiltert", ohne dass dabei die Signalübertragung innerhalb des CAN-Bussystems beeinträchtigt wird. D.h. aufgrund der vorhandenen Verbindung zwischen dem externen Empfängergerät 20 und dem ISO-BUS 18, sind mit dem externen Empfängergerät 20 wechselseitige Signale bzw. Informationen zwischen dem mindestens einen Anzeige- und Eingabeterminal 14 und dem mindestens einen Steuerrechner 16 erfassbar. Da mittels des externen Empfängergeräts 20 somit die zwischen dem mindestens einen Anzeige- und Eingabeterminal 14 und dem zentralen Steuerrechner 16 übertragenen Signale bzw. Informationen (wie bspw. CAN Protokolle oder ISO Bus Protokolle) quasi abgehört werden, liegen dem externen Empfängergerät 20 die gleichen Informationen vor wie dem Steuerrechner 16 und/oder dem Anzeige- und Eingabeterminal 14.

In den zwischen dem mindestens einen Anzeige- und Eingabeterminal 14 und dem zentralen Steuerrechner 16 übertragenen Signale bzw. Informationen (wie bspw. CAN Protokolle oder ISO Bus Protokolle) befinden sich die für die Anzeige am externen Empfängergerät 20 erforderlichen Angaben, so dass auf Grundlage der mitgehörten bzw. abgehörten Informationen das externe Empfängergerät 20 Bilder generieren kann.

Dem externen Empfängergerät 20 können ein oder mehrere Datenspeicher zugeordnet sein, wobei im vorliegenden Ausführungsbeispiel dem externen Empfängergerät 20 eine Datencloud 24 zugeordnet ist, d.h. die von dem externen Empfängergerät 20 generierten Informationen bzw. Bilder werden an die Datencloud 24 übertragen und in der Datencloud 24 hinterlegt und/oder gespeichert.

Um die Informationen bzw. Bilder vom externen Empfängergerät 20 an die Datencloud 24 oder ggf. auch umgekehrt zu übertragen, umfasst das externe Empfängergerät 20 eine weitere Kommunikationsschnittstelle, wie z.B. Bluetooth, W-Lan, GSM-Modem, etc., so dass die Datenübertragung bspw. drahtlos oder drahtgebunden oder dergleichen erfolgen kann.

Diese in der Datencloud 24 hinterlegten und/oder gespeicherten Bilder werden weiter drahtgebunden oder drahtlos an ein mobiles Endgerät 26 oder dergl. mobile Computereinrichtung und/oder auf einen Hof-PC 28 übertragen, so dass bspw. externe Personen über die aktuellen Maschinenparameter oder dergleichen informiert werden können. Diese Bilder bzw. Informationen können auch zur Fernwartung bzw. Ferndiagnose verwendet werden.

Dem externen Empfängergerät 26 werden die zwischen dem mindestens einen Anzeige- und Eingabeterminal 14 und dem Steuerrechner 16 übertragenen Signale bzw. Informationen permanent oder zyklisch zugeführt, wobei sich in der Praxis die zyklische Datenübertragung aufgrund der sonst zu hohen Datenmengen als vorteilhaft erwiesen hat. Bei der zyklischen Datenübertragung werden über die Datenschnittstelle reduzierte Teilmengen der vom Rechnermodul erfassten Daten übermittelt, wobei die Bildübertragung in Intervallen von bspw. einer Sekunde oder einer halben Sekunde oder dergl. erfolgen kann. Die Dauer bzw. Länge eines Intervalls hängt jedoch meist von der Menge an übertragenen Daten ab, d.h. je häufiger eine Generierung von Bildern erfolgt, desto größer sind die somit übertragenen Datenvolumen. Das externe Empfängergerät 20 bzw. das mit diesem gekoppelte Rechnermodul kann entsprechend dimensioniert sein, dass eine möglichst häufige Bildgenerierung möglich ist.

Mit dem vorliegenden externen Empfängergerät 20 ist es auch möglich, die jeweiligen Bilder auf ein entsprechendes Dateiformat oder eine entsprechende Dateigröße zu komprimieren, so dass die jeweiligen zu versendenden Datenvolumen verringert werden, jedoch dennoch noch eine ausreichende Bildqualität erzeugt wird. Dies hat den Vorteil, dass Bilder an jegliche Anzeigeeinrichtungen 22 wie bspw. Tablet 26 oder Hof-PC 28 übertragen werden können, da diese somit keine großen Datenmengen empfangen müssen.

Zusätzlich kann dem externen Empfängergerät 20 ein externes Eingabegerät zur Erfassung und Verarbeitung von Nutzereingaben zugeordnet sein, so dass der Benutzer nicht nur angezeigte Daten erhalten, sondern auch selbst Einfluss auf die Datensituation des CAN-Bus nehmen kann, etwa durch manuelle Eingaben an einer auf dem externen Eingabegerät angezeigten Benutzeroberfläche, die wiederum an den CAN-Bus übermittelt wird, um dort gewünschte Aktionen auszulösen. Bei dem externen Eingabegerät handelt es sich bspw. um das mobile Endgerät 26 oder dergl. mobile Computereinrichtung und/oder den Hof-PC 28, über welche die vom externen Enmpfängergerät 20 generierten Bilder optisch ausgegeben werden.

Das System 10 ist derart ausgebildet, dass die Kommunikation zwischen dem externen Empfängergerät 20 und dem Steuerrechner 16 und/oder mit dem Anzeige- und Eingabeterminal 14 eine Initialisierung beim erstmaligen und/oder beim wiederholten Ankoppeln des Rechnermoduls und/oder bei erstmaligen oder wiederholten Nutzungen der Datenschnittstelle vorsieht. So kann etwa vorgesehen sein, dass bei erstmaliger Kommunikation zwischen dem Steuerrechner 16 und dem Anzeige- und Eingabeterminal 14 Initialisierungs-Nachrichten übertragen werden, insbesondere gemäß der ISO 11783. Solche Daten können bspw. in der Form gebildet sein: "Zeige Status Drehzahl Dosiergerät an Position X an". Mittels dieser Initialisierungs-Nachrichten erfolgt dementsprechend zunächst die generelle Konfiguration der Bedienoberfläche des Anzeige- und Eingabeterminals 14.

Die Kommunikation zur Konfiguration des Anzeige- und Eingabeterminals14 wird durch Datenübertragungen vom Rechnermodul genutzt. Von Vorteil kann es zudem sein, wenn die Konfiguration in einer Weise durchgeführt wird, dass das Rechnermodul eine Datenkommunikation unter Nutzung des CAN-Bussystems zwischen dem Steuerrechner 16 und dem Anzeige- und Eingabeterminal 14 auf Grundlage eines zeitlich vorgeordneten Initialisierungsvorganges des Rechnermoduls innerhalb des CAN-Bussystems freigibt.

Um sicher zu stellen, dass das externe Empfängergerät 20 bzw. die Datenverarbeitungseinrichtung jegliche zwischen dem Steuerrechner 16 und dem Anzeige- und Eingabeterminal 14 übertragenen Informationen, insbesondere der Initialisierungsnachrichten mit erfasst, kann eine Freigabe der Signalübertragung zwischen dem Steuerrechner 16 und dem Anzeige- und Eingabeterminal 14 erst dann erfolgen, nachdem die Kommunikation zwischen dem Steuerrechner 16 und der Datenverarbeitungseinrichtung und/oder zwischen dem Anzeige- und Eingabeterminal 14 und der Datenverarbeitungseinrichtung sichergestellt ist. Dies wird bspw. dadurch erreicht, indem der Steuerrechner 16 ausgebildet ist, erst dann Initialisierungsnachrichten zu senden und/oder zu empfangen, nachdem diese eine Kommunikationsrückmeldung der Datenverarbeitungseinrichtung bzw. des externen Empfängergeräts 20 erhalten hat.

Die Datenverarbeitungseinrichtung bzw. das externe Empfängergerät 20 ist so ausgebildet, dass diese sowohl vom Terminal als auch von der ECU Daten aktiv abfragen kann. D.h. wenn die Datenverarbeitungseinrichtung oder das Rechnermodul andere Informationen vorliegen hat als bspw. das Terminal, kann die Datenverarbeitungseinrichtung in der ECU einen sog. Reboot auslösen bzw. initialisieren, so dass wiederum die Initialisierungsdaten nochmal übertragen werden, wobei dies zudem nur dann erforderlich sein kann wenn bspw. aus diversen Gründen die Datenverarbeitungseinrichtung nicht als "erstes" mit dem ISO-Bus in Datenkommunikation steht.

Auch ist die Datenverarbeitungseinrichtung bzw. das externe Empfängergerät 20 derart ausgebildet, um Daten von dem zentralen Steuerrechner 16 oder vom Anzeige- und Eingabeterminal 14 aktiv abfragen zu können. Z.B. "Welche Daten habt ihr im Protokoll in Zeile XY versendet".

Durch abhören jeglicher Nachrichten (Protokolle) wird die komplette Kommunikation am ISO-Bus 18 abgehört, d.h. dass nicht nur eine statische graphische Nutzeroberfläche erzeugt werden kann, sondern das bspw. auf Basis sich verändernder Daten, d.h. wenn sich die graphische Darstellung des Terminal ändert, auch wieder mittels der Datenverarbeitungseinrichtung bzw. dem externen Empfängergerät 20 neue Bilder erzeugt werden können. Dies kann insbesondere bei Statusanzeigen (z.B. Füllstand, Bearbeitete Fläche, Aktiv geschaltene Maschinenkomponenten, etc.) relevant sein.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Bussystem, CAN-Datenbussystem
- 12: Landwirtschaftliche Arbeitsmaschine
- 13: Anbaugerät
- 14: Anzeige- und Eingabeterminal
- 16: Steuerrechner, ECU
- 18: ISO-BUS
- 20: Externe Empfängergerät
- 22: Anzeigegerät
- 24: Datencloud
- 26: Mobiles Endgerät, Tablet
- 28: Hof-PC

## Patentansprüche

1. System (10) zur Datenkommunikation zwischen landwirtschaftlichen Arbeitsmaschinen (12) oder Komponenten von Arbeitsmaschinen und/oder Arbeitskombinationen und wenigstens einem externen Empfängergerät (20) mittels Bussystem, vorzugsweise mittels CAN-Bussystem, welches Bussystem mindestens einen Steuerrechner (16) sowie ein, insbesondere einem Arbeitsplatz eines Maschinenführers zugeordnetes Anzeige- und Eingabeterminal (14) umfasst, und welches Bussystem darüber hinaus wenigstens eine Datenschnittstelle zur Datenkommunikation mit mindestens einem externen Empfängergerät (20) aufweist, das durch zumindest ein Anzeigegerät (22) und/oder Bediengerät gebildet ist, wobei in der Datenschnittstelle aufbereitete und umgewandelte Universaldaten aus den im Bussystem transportierten Daten oder Datenprotokollen in Gestalt von mit dem wenigstens einen externen Empfängergerät (20) grafisch darstellbaren Bilddaten gebildet und dem mindestens einen Empfängergerät (20) zur Verfügung gestellt werden.

2. System nach Anspruch 1, bei dem der Datenschnittstelle ein Rechnermodul zugeordnet ist, das die an das externe Empfängergerät (20) zu liefernden Daten aus den im Bussystem zwischen dem Steuerrechner (16) und dem Anzeige- und Eingabeterminal (14) übertragenen Daten und Datenprotokollen gewinnt.

3. System nach Anspruch 1 oder 2, bei dem das externe Empfängergerät (20) durch ein mobiles Endgerät, insbesondere durch einen Tablet-Rechner gebildet ist.

4. System nach einem der Ansprüche 1 bis 3, bei dem die Datenschnittstelle durch eine systemoffene Schnittstelle gebildet ist, die grafisch darstellbare Daten aus den im Bussystem transportierten Daten oder Datenprotokollen erzeugt, die auch mit solchen externen Empfängergeräten (20) visualisierbar sind, die nicht einer Bussystem- oder CAN-Bussystem-konformen Spezifikation unterliegen.

5. System nach einem der Ansprüche 1 bis 4, bei dem die Datenschnittstelle mit einer drahtlosen Ankoppelstelle zur Herstellung einer drahtlosen Datenübertragungsverbindung zu mindestens einem externen Empfängergerät (20) ausgestattet oder gekoppelt ist.

6. System nach einem der vorherigen Ansprüche, bei dem der Datenschnittstelle ein Rechnermodul zugeordnet ist, das die an das externe Empfängergerät (20) zu liefernden Daten aus den im CAN-Bussystem übertragenen Signalen gewinnt, insbesondere ohne Beeinflussung der Signalübertragung innerhalb des CAN-Bussystems.

7. System nach einem der vorherigen Ansprüche, bei dem das der Datenschnittstelle zugeordnete Rechnermodul neben einer Nutzung des externen Empfängergerätes (20) als Anzeigegerät eine Datenübermittlung an das CAN-Bussystem erlaubt, insbesondere durch Übermittlung von Nutzereingaben und/oder von Steuerbefehlen durch das externe Empfängergerät (20) und/oder durch ein externes Eingabegerät.

8. System nach einem der vorherigen Ansprüche, bei dem das der Datenschnittstelle zugeordnete Rechnermodul im Wesentlichen alle zwischen dem Steuerrechner (16) und dem mindestens einen Anzeige- und Eingabeterminal (14) über das CAN-Bussystem ausgetauschten Daten erfasst und protokolliert.

9. System nach einem der vorherigen Ansprüche, bei dem der leitungsgebundenen oder drahtlosen Ankoppelstelle der Datenschnittstelle permanent alle vom Rechnermodul erfassten Daten übermittelt werden.

10. System nach einem der Ansprüche 1 bis 7, bei dem der leitungsgebundenen oder drahtlosen Ankoppelstelle der Datenschnittstelle in zyklischen Perioden reduzierte Teilmengen der vom Rechnermodul erfassten Daten übermittelt werden.

11. System nach einem der vorherigen Ansprüche, bei dem das externe Empfängergerät (20) durch wenigstens ein drahtlos empfangendes Anzeigeterminal (22) gebildet ist.

12. System nach einem der vorherigen Ansprüche, bei welchem dem externen Empfängergerät (20) ein externes Eingabegerät zur Erfassung und Verarbeitung von Nutzereingaben zugeordnet ist.

13. System nach einem der vorherigen Ansprüche, bei dem das externe Empfängergerät (20) einen oder mehrere Datenspeicher umfasst.

14. System nach einem der vorherigen Ansprüche, bei dem das externe Anzeigeterminal die grafische Darstellung des dem Maschinenführer zugänglichen Anzeige- und Eingabeterminals dupliziert und anzeigt.

15. System nach einem der Ansprüche 1 bis 13, bei dem das externe Anzeigeterminal ausgewählte Daten aus der grafischen Darstellung des dem Maschinenführer zugänglichen Anzeige- und Eingabeterminals (14) dupliziert und anzeigt.

16. System nach einem der vorherigen Ansprüche, bei dem das externe Empfängergerät (20) über das mit dem CAN-Bussystem gekoppelte Rechnermodul mit dem zentralen Steuerrechner (16) und/oder mit dem Anzeige- und Eingabeterminal (14) kommuniziert.

17. System nach Anspruch 15, bei dem die Kommunikation zwischen dem externen Empfängergerät (20) und dem Steuerrechner (16) und/oder mit dem Anzeige- und Eingabeterminal (14) eine Initialisierung beim erstmaligen und/oder beim wiederholten Ankoppeln des Rechnermoduls und/oder bei erstmaligen oder wiederholten Nutzungen der Datenschnittstelle vorsieht.

18. System nach Anspruch 15 oder 16, bei dem die Kommunikation zur Konfiguration des Anzeige- und Eingabeterminals (14) durch Datenübertragungen vom Rechnermodul genutzt wird.

19. System nach einem der Ansprüche 15 bis 17, bei dem die Konfiguration in einer Weise durchführbar ist, dass das Rechnermodul eine Datenkommunikation unter Nutzung des CAN-Bussystems zwischen dem Steuerrechner (16) und dem Anzeige- und Eingabeterminal (14) auf Grundlage eines zeitlich vorgeordneten Initialisierungsvorganges des Rechnermoduls innerhalb des CAN-Bussystems freigibt.

20. Verfahren zur Datenkommunikation zwischen landwirtschaftlichen Arbeitsmaschinen (12) oder Komponenten von Arbeitsmaschinen und/oder Arbeitskombinationen und wenigstens einem externen Empfängergerät (20) mittels Bussystem, vorzugsweise mittels CAN-Bussystem (10), wobei das Bussystem (10) eine Datenverbindung zwischen mindestens einem Steuerrechner (16) sowie einem, insbesondere einem Arbeitsplatz eines Maschinenführers zugeordneten Anzeige- und Eingabeterminal (14) herstellt, wobei das Bussystem (10) darüber hinaus über wenigstens eine Datenschnittstelle eine Datenkommunikation mit mindestens einem, durch zumindest ein Anzeigegerät (22) und/oder Bediengerät gebildeten externen Empfängergerät (20) erlaubt, wobei in der Datenschnittstelle aufbereitete und umgewandelte Universaldaten aus den im Bussystem (10) transportierten Daten oder Datenprotokollen in Gestalt von mit dem wenigstens einen externen Empfängergerät (20) grafisch darstellbaren Bilddaten gebildet und dem mindestens einen Empfängergerät (20) zur Verfügung gestellt werden.

21. Verfahren nach Anspruch 20, bei dem die Datenschnittstelle mit einem ihr zugeordneten Rechnermodul kommuniziert, welches die an das externe Empfängergerät (20) übermittelten Daten aus den im Bussystem (10) zwischen dem Steuerrechner (16) und dem Anzeige- und Eingabeterminal (14) übertragenen Daten und Datenprotokollen gewinnt.

22. Verfahren nach Anspruch 20 oder 21, bei dem als externes Empfängergerät (20) ein mobiles Endgerät, insbesondere ein Tablet-Rechner verwendet wird.

23. Verfahren nach einem der Ansprüche 20 bis 22, bei dem die Datenschnittstelle durch eine systemoffene Schnittstelle gebildet ist, die grafisch darstellbare Daten liefert, die auch mit solchen externen Empfängergeräten (20) visualisierbar sind, die nicht einer CAN-Bussystem-konformen Spezifikation unterliegen.

24. Verfahren nach einem der Ansprüche 20 bis 23, das ein System zur Datenkommunikation und/oder zur Steuerung und/oder Regelung und/oder zur Überwachung landwirtschaftlicher Arbeitsmaschinen (12) oder Arbeitskombinationen gemäß einem der Ansprüche 1 bis 19 nutzt oder das mit einem solchen System arbeitet.

25. Landwirtschaftliche Arbeitsmaschine (12) oder Arbeitskombination, die ein System (10) gemäß einem der Ansprüche 1 bis 19 aufweist und/oder nutzt.
